# EUROPÄISCHE PATENTSCHRIFT

(11) **EP 3 191 791 B1**
(45) Veröffentlichungstag und Bekanntmachung des Hinweises auf die Patenterteilung: **01.04.2020**
(21) Anmeldenummer: 15754238.2
(22) Anmeldetag: 27.08.2015
(51) Int. Cl.: F03D 17/00, G01M 5/00, G01B 7/16

(54) **VERFAHREN UND STEUERGERÄT ZUM ERFASSEN EINER LAST AUF EIN ROTORBLATT EINER WINDENERGIEANLAGE**
METHOD AND CONTROL DEVICE FOR MEASURING A LOAD ON A ROTOR BLADE OF A WIND POWER PLANT
PROCÉDÉ ET APPAREIL DE COMMANDE PERMETTANT DE DÉTECTER UNE CHARGE SUR UNE PALE DE ROTOR D'UNE ÉOLIENNE

(30) Priorität: 12.09.2014 DE 102014218266
(43) Veröffentlichungstag der Anmeldung: 19.07.2017
(73) Patentinhaber: Weidmüller Monitoring Systems GmbH, 01099 Dresden (DE)
(72) Erfinder: BUCHTALA, Boris, 75417 Muehlacker (DE); HESS, Felix, 71642 Ludwigsburg (DE)
(74) Vertreter: Kleine, Hubertus
(86) Internationale Anmeldenummer: PCT/EP2015/069604
(87) Internationale Veröffentlichungsnummer: WO 2016/037858

(56) Entgegenhaltungen:
- WO-A1-2013/091638
- WO-A1-2013/097860
- DE-A1-102010 019 014
- DE-A1-102012 108 776
- US-A1- 2006 140 761
- US-A1- 2010 140 936
- US-A1- 2011 158 806
- US-A1- 2011 285 129
- US-A1- 2013 272 874

## Beschreibung

Die vorliegende Erfindung bezieht sich auf ein Verfahren zum Erfassen einer Last auf ein Rotorblatt einer Windenergieanlage und auf ein entsprechendes Steuergerät.

Bei einer Windenergieanlage bewirkt der Wind aufgrund aerodynamischer Kräfte eine Verformung der Rotorblätter. Um regelnd eingreifen zu können, ist es erforderlich, diese Verformung zu erfassen.

Aus der Druckschrift WO 2013/091638 A1 ist bekannt, im Rotorblatt einer Windkraftanlage einen Biegesensor einzusetzen, der als ein absolut arbeitender Belastungssensor fungiert. Abhängig von dem Signal des Biegesensors wird eine Rotorblatteinstellung (Pitch) vorgenommen. Die Druckschrift DE 10 2010 019 014 A1 beschreibt eine Verwendung eines Funkpeilverfahrens zur Ermittlung der Durchbiegung von Rotorblättern. Gemäß der Druckschrift US 2013/0272874 A1 werden Beschleunigungsmesssensoren in Rotorblättern verwendet, um eine Belastung eines Rotorblatts zu bestimmen. In ähnlicher Weise wird in der Druckschrift WO 2013/097860 A1 ein Biegemessstreifen oder ein Beschleunigungsmesser als Lastsensor im Blatt eingesetzt. Gemäß der Druckschrift US 2011/0158806 A1 werden Spannungen an Befestigungsschrauben der Rotorblätter gemessen, um die Belastung eines Rotorblatts zu bestimmen. Die Druckschrift US 2006/0140761 A1 beschreibt eine Messung von Beschleunigungssignalen an der Generatorplattform einer Windkraftanlage, aus der auf Belastungen des Rotors geschlossen wird.

Die Druckschrift US 2011/0285129 A1 beschreibt eine Verwendung von zwei Beschleunigungssensoren im Blatt einer Windkraftanlage, wobei die beiden Sensoren radial unterschiedlich von der Nabe der Windkraftanlage beabstandet sind. Die Verwendung von zwei Beschleunigungssensoren ermöglicht eine zuverlässige und fehlertolerante Bereitstellung von Beschleunigungswerten, aus denen wiederum Lastsituationen abgeleitet werden können.

Eine Verwendung von unterschiedlichen Arten von Sensoren ist aus der Druckschrift US 2010/0140936 A1 bekannt. Gemäß dieser Druckschrift werden zur Bestimmung von Positionsdaten Absolutwert-Sensoren gemäß dem Global Positioning System (GPS) eingesetzt. Zusätzlich ist die Verwendung von Beschleunigungssensoren beschrieben, die separate von den GPS-Daten Beschleunigungswerte zur Verfügung stellen. Die Druckschrift DE 10 2012 108 776 A1 beschreibt die Verwendung von Dehnungsmesssensoren an einer Blattwurzel eines Rotorblatts und von Beschleunigungssensoren in einem gewissen Abstand von der Rotorblattwurzel, beispielsweise in der Blattmitte. Aus den Beschleunigungssensoren werden durch zweifache Integration Positionsdaten bestimmt, wobei aus einem Vergleich der gemessenen Dehnungswerte an der Blattwurzel eine Steifigkeit bzw. Elastizität des Rotorblatts ermittelt wird.

Vor diesem Hintergrund werden mit dem hier vorgestellten Ansatz ein Verfahren zum Erfassen einer Last auf ein Rotorblatt einer Windenergieanlage und ein Steuergerät, das dieses Verfahren verwendet, gemäß den Hauptansprüchen vorgestellt. Vorteilhafte Ausgestaltungen ergeben sich aus den jeweiligen Unteransprüchen und der nachfolgenden Beschreibung.

Durch den hier vorgestellten Ansatz kann die Blattbiegung von Rotorblättern an einer Windenergieanlage gemessen werden. Zur Messung werden Beschleunigungssensoren verwendet. Diese Messungen werden durch eine weitere Absolutwertmessung referenziert. Dazu werden beispielsweise Dehnmessstreifen oder eine optische Messung eingesetzt.

Um moderne Regelungsverfahren, wie die individuelle Pitchregelung, einsetzen zu können, ist eine zuverlässige und preiswerte Sensorik erforderlich. Bei kurzzeitigen Feldtests ist dies nicht so wichtig. So sind Dehnungsmessstreifen zur Belastungsmessung zwar gut geeignet, eine Lebensdauer von 20 Jahren wird damit aber nicht erreicht. Da damit zu rechnen ist, dass ein solcher Sensor während der Lebensdauer der Windkraftanlage einen Defekt erleidet, ist eine sichere Erkennung wichtig, insbesondere, wenn der Sensor für eine Regelung eingesetzt wird. Durch den hier vorgestellten Ansatz wird ein verbessertes Sensorkonzept vorgeschlagen.

Kern der Erfindung ist es, kostengünstige Sensoren für die Belastungsmessung einzusetzen und Fehler durch Redundanz zu erkennen. Außerdem können durch die Kombination verschiedener Sensoren bessere Messergebnisse erreicht werden. Zusätzlich lassen sich so Sensoren einsetzten, die alleine nicht für eine Belastungsmessung geeignet sind und erst in Kombination die Belastungsmessung erlauben. Dadurch ist es aber auch möglich auf Sensoren mit möglicherweise viel längerer Lebensdauer zu rückzugreifen.

Es wird ein Verfahren zum Erfassen einer Last auf ein Rotorblatt einer Windenergieanlage vorgestellt, wobei das Verfahren die folgenden Schritte aufweist:
Herleiten einer Auslenkung des Rotorblatts aus einem Beschleunigungswert, der eine Beschleunigung am Rotorblatt repräsentiert, wobei der Beschleunigungswert zweifach integriert wird, um die Auslenkung zu erhalten;
Bestimmen eines Signaldriftanteils der Auslenkung unter Verwendung eines Absolutwerts, der einen absoluten Messwert eines Absolutsensors an dem Rotorblatt repräsentiert; und
Ermitteln der Last unter Verwendung des Signaldriftanteils und der Auslenkung sowie Materialkennwerten des Rotorblatts.

Unter einer Windenergieanlage kann eine Windkraftanlage beziehungsweise eine Windturbine verstanden werden. Dabei wird ein Rotor der Windenergieanlage durch Windenergie in Rotation versetzt und mit dem Rotor ein elektrischer Generator angetrieben. Eine Last kann eine Kraft auf ein Rotorblatt des Rotors sein. Eine Auslenkung kann Wert eine Wegstrecke sein, um die das Rotorblatt durch die Last aus einer Ruhelage gedrückt wird. Ein Signaldriftanteil kann ein Sockelwert sein, um den ein Wert der Auslenkung verschoben ist. Der Signaldriftanteil kann sich mit der Zeit verändern. Der Signaldriftanteil resultiert aus der Herleitung der Auslenkung aus der Beschleunigung. Ein absoluter Messwert kann driftfrei sein. Ein Materialkennwert kann beispielsweise eine Biegesteifigkeit und/oder eine Torsionssteifigkeit sein.

In einer ersten erfindungsgemäßen Alternative wird die Auslenkung mit einem Dehnungswert als Absolutwert verglichen, um den Signaldriftanteil zu erhalten. Der Dehnungswert repräsentiert eine durch einen Dehnmessstreifen am Rotorblatt erfassbare Dehnung des Rotorblatts. Die Dehnung wird durch die Last hervorgerufen. Die Dehnung hängt über die Materialkennwerte unmittelbar mit der Last zusammen. Dehnmessstreifen benötigen eine einwandfreie Verbindung zu dem Rotorblatt. Die Dehnungsmessung erfolgt driftfrei.

In einer zweiten erfindungsgemäßen Alternative wird die Auslenkung mit einem Positionswert als Absolutwert verglichen, um den Signaldriftanteil zu erhalten. Der Positionswert repräsentiert eine durch ein Kamerasystem am Rotorblatt erfassbare Position des Rotorblatts. Das Kamerasystem kann das Rotorblatt zumindest teilweise erfassen. Das Kamerasystem kann im Inneren des Rotorblatts angeordnet sein. Die Kamera kann fix ausgerichtet sein. Das Rotorblatt kann sich in einem Bild der Kamera unter der Last bewegen. Die Kamera kann eine geringe Auflösung aufweisen. Die Positionsmessung erfolgt ebenfalls driftfrei.

Dadurch, dass der Beschleunigungswert zweifach integriert wird, um die Auslenkung zu erhalten, kann die hohe Empfindlichkeit und Robustheit des Beschleunigungssensors zum Messen der ausgelenkten Strecke verwendet werden.

Der Signaldriftanteil wird dann erfindungsgemäß von der Auslenkung abgezogen, um einen stabilisierten Auslenkungswert zum Ermitteln der Last zu erhalten. Damit kann die Auslenkung driftfrei gemacht werden.

Die Auslenkung und der Absolutwert können unter Verwendung eines Kalmanfilters verglichen werden, um den Signaldriftanteil zu bestimmen. Dabei kann der Absolutwert als Führungsgröße dienen. Die Auslenkung wird der Führungsgröße nachgeführt. Ein Betrag des Nachführens wird als Signaldriftanteil bereitgestellt.

Im Schritt des Bestimmens kann ferner der Absolutwert unter Verwendung der Auslenkung plausibilisiert werden. Wenn der Absolutsensor einen Fehler aufweist, kann der Fehler so gefunden werden. Damit kann eine sichere Funktion der Windenergieanlage gesichert werden.

Der Absolutwert kann als fehlerhaft definiert werden, wenn der Absolutwert um mehr als einen Toleranzbereich von der Auslenkung abweicht. Damit kann ein Spielraum beim Erkennen eines Sensorfehlers bereitgestellt werden. Schwankungen aufgrund von veränderten Umweltbedingungen werden so nicht berücksichtigt.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer und/oder Datensignale ausgibt. Das Steuergerät kann eine Schnittstelle aufweisen, die hard- und/oder softwaremäßig ausgebildet sein kann. Bei einer hardwaremäßigen Ausbil dung können die Schnittstellen beispielsweise Teil eines sogenannten System ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die Erfindung wird nachstehend anhand der beigefügten Zeichnungen beispielhaftnäher erläutert. Es zeigen:
- Fig. 1: eine Darstellung einer Windenergieanlage mit einer Vorrichtung zum Erfassen von Lasten auf Rotorblätter der Windenergieanlage gemäß einem Ausführungsbeispiel der Erfindung; und
- Fig. 2: ein Ablaufdiagramm eines Verfahrens zum Erfassen einer Last auf ein Rotorblatt einer Windenergieanlage gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

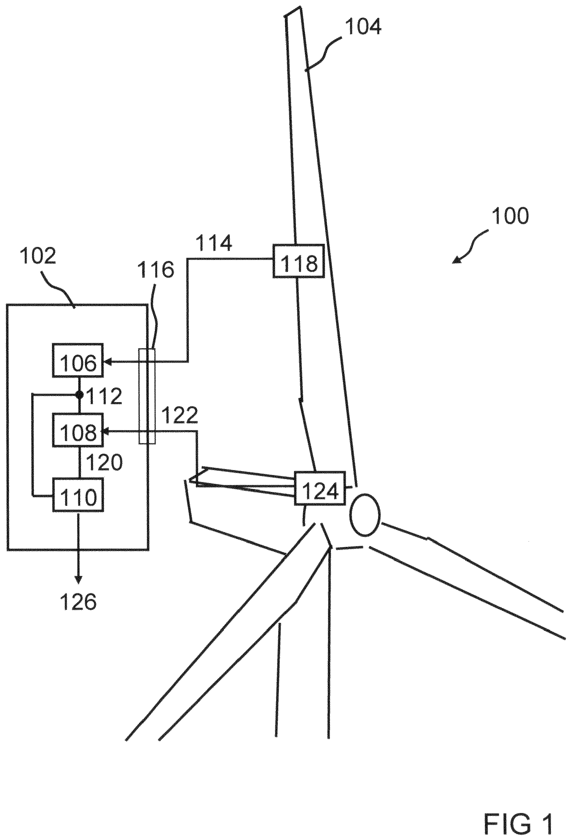

Fig. 1 zeigt eine Darstellung einer Windenergieanlage 100 mit einem Steuergerät 102 zum Erfassen von Lasten auf Rotorblätter 104 der Windenergieanlage 100 gemäß einem Ausführungsbeispiel der Erfindung. Das Steuergerät 102 weist eine Einrichtung 106 zum Herleiten, eine Einrichtung 108 zum Bestimmen und eine Einrichtung 110 zum Ermitteln auf. Das Steuergerät kann beispielsweise in der Gondel der Windenergieanlage 100 angeordnet sein.
Die Windenergieanlage 100 weist einen Beschleunigungssensor 118 auf. Der Beschleunigungssensor 118 ist mit dem Rotorblatt 104 verbunden. Der Beschleunigungssensor 118 ist hier etwa in der Mitte des Rotorblatts 104 positioniert. Der Beschleunigungssensor 118 kann auch weiter in Richtung einer Blattspitze des Rotorblatts 104 positioniert sein, da die erfassbare Beschleunigung des Rotorblatts 104 zur Blattspitze hin zunimmt. Der Beschleunigungssensor 118 ist ausgebildet, um einen Beschleunigungswert 114 bereitzustellen, der eine Beschleunigung am Rotorblatt 104 repräsentiert.

Die Einrichtung 106 zum Herleiten ist dazu ausgebildet, eine Auslenkung 112 eines Rotorblatts 104 aus dem Beschleunigungswert 114 herzuleiten. Dazu wird der Beschleunigungswert 114 über eine Schnittstelle 116 des Steuergeräts 102 von einem Beschleunigungssensor 118 eingelesen. Der Beschleunigungswert 114 wird gemäß diesem Ausführungsbeispiel zweifach aufintegriert, um die Auslenkung 112 zu erhalten.

Die Einrichtung 108 zum Bestimmen ist dazu ausgebildet, einen Signaldriftanteil 120 der Auslenkung 112 unter Verwendung eines Absolutwerts 122 zu bestimmen. Der Absolutwert 122 repräsentiert einen absoluten Messwert eines Absolutsensors 124 an dem Rotorblatt 104. Der absolute Messwert weist keinen Signaldriftanteil auf. Der Absolutwert 122 wird über die Schnittstelle 116 von dem Absolutsensor 124 eingelesen. Die Auslenkung 112 und der Absolutwert 122 werden unter Verwendung eines Kalmanfilters verglichen, um den Signaldriftanteil 120 zu bestimmen.

Die Einrichtung 110 zum Ermitteln ist dazu ausgebildet, eine Last auf das Rotorblatt 104 unter Verwendung des Signaldriftanteils 120 und der Auslenkung 112 sowie Materialkennwerten des Rotorblatts 104 zu ermitteln und in einem die Last repräsentierenden Lastwert 126 abzubilden. Dabei wird der Signaldriftanteil 120 von der Auslenkung 112 abgezogen, um einen stabilisierten Auslenkungswert zum Ermitteln der Last zu erhalten. Die Last ergibt sich aus einer Lastkennlinie des Rotorblatts 104. Die Lastkennlinie beschreibt einen Zusammenhang zwischen der tatsächlichen Auslenkung 112 des Rotorblatts und der Last auf das Rotorblatt 104.

In einem Ausführungsbeispiel ist der Absolutwert 122 ein Dehnungswert 122, der mit der Auslenkung 112 verglichen wird, um den Signaldriftanteil 120 zu erhalten. Der Dehnungswert 122 repräsentiert eine durch einen Dehnmessstreifen 124 am Rotorblatt 104 erfasste Dehnung des Rotorblatts 104. Der Dehnmessstreifen 124 oder die Dehnmessstreifen 124 sind an einem Blattfuß des Rotorblatts 104 angebracht, da hier die Dehnung maximal ist.

In einem anderen Ausführungsbeispiel ist der Absolutwert 122 ein Positionswert 122, der mit der Auslenkung 112 verglichen wird, um den Signaldriftanteil 120 zu erhalten. Der Positionswert 122 repräsentiert eine durch ein Kamerasystem 124 am Rotorblatt 104 erfasste Position des Rotorblatts 104. Das Kamerasystem 124 erfasst als Merkmale das Rotorblatt 104, Teile des Rotorblatts 104 und/oder bestimmte Markierungen am oder im Rotorblatt 104 auf optischem Weg. Die Position des Rotorblatts 104 wird aus Koordinaten von Bildpunkten ermittelt, an denen die Merkmale abgebildet sind. Eine Erfassungsgenauigkeit des Kamerasystems 124 ergibt sich aus einer Winkelauflösung pro Bildpunkt.

Bei Windenergieanlagen 100 mit horizontaler Achse und drei Rotorblättern 104 wird durch synchrone Verstellung der Blattwinkel die Drehzahl oberhalb der Nennwindgeschwindigkeit so geregelt, dass durch die Änderung des Anstellwinkels der aerodynamische Auftrieb und somit das Antriebsmoment in solcher Weise verändert wird, dass die Anlage 100 im Bereich der Nenndrehzahl gehalten werden kann. Bei Windgeschwindigkeiten oberhalb der Abschaltegeschwindigkeit wird dieser Blattverstellmechanismus zudem als Bremse benutzt, indem die Blätter 104 mit der Nase in den Wind gestellt werden, so dass der Rotor keine nennenswerten Antriebsmomente mehr liefert.

Bei dieser kollektiven Blattverstellung ergeben sich aufgrund asymmetrischer aerodynamischer Lasten Nick- und Giermomente auf die Gondel. Die asymmetrischen Lasten entstehen z. B. durch Windscherungen in vertikaler Richtung (Grenzschichten), Gierwinkelfehler, Böen und Turbulenzen, Aufstauung der Strömung am Turm etc. Diese asymmetrischen aerodynamischen Lasten können reduziert werden, indem der Anstellwinkel der Blätter 104 individuell verstellt wird. (engl.: Individual Pitch Control, IPC). Dabei werden Sensoren 124 in oder an den Rotorblättern 104 angebracht, um die Schlagbiegemomente zu messen. Diese dienen dann als Regelgrößen für die individuelle Blattverstellung.

Für das Condition-Monitoring von Rotorblättern 104 werden Beschleunigungssensoren 118 in den Blättern 104 eingesetzt. Damit lassen sich Eigenfrequenzen des Rotorblattes 104 messen. Schäden des Rotorblattes 104 können detektiert werden, da sich dann die Eigenfrequenzen verschieben. Eine Belastungsmessung ist nur mit Beschleunigungssensoren 118 nicht möglich, da nur Beschleunigungen gemessen werden, nicht aber die Blattlasten.

Der hier vorgestellte Ansatz beschreibt ein verbessertes Condition-Monitoring. Dabei werden Informationen 114, 122 zu den erlebten Lasten eines Rotorblattes 104 erfasst.

Für das Condition-Monitoring werden in Rotorblättern 104 Beschleunigungssensoren 118 eingesetzt. Diese allein sind für eine Belastungsmessung ungeeignet, da zur Berechnung der Blattauslenkung am Ort des Sensors 118 das Sensorsignal 114 zweimal integriert werden muss. Eine solche zweifache Integration hat aber einen zeitlichen Drift 120, der dazu führt, dass der ausgegebene Wert 112 schon nach kurzer Zeit nicht mehr mit der tatsächlichen Blattauslenkung übereinstimmt. Bei dem hier vorgestellten Ansatz wird das Sensorsignal 112 des Beschleunigungssensors 118 von der Drift 120 befreit, wodurch die hohe Auflösung des Beschleunigungssensors 118 ausgenutzt werden kann.

In einem Ausführungsbeispiel ist der Beschleunigungssensor 118 mit einem Dehnmessstreifen 124 kombiniert. Der Dehnmessstreifen 124 ist an der Blattwurzel angebracht und erfasst die Blattbelastung. Im Steuergerät 102 wird überprüft, ob die gemessene Dehnung 122 und die aus der Beschleunigungsmessung errechneten Werte 112 zueinanderpassen. Diese Korrelation kann durch einen Beobachter, beispielsweise ein Kalmanfilter, durchgeführt werden. Wird festgestellt, dass die gemessenen Sensorwerte nicht zueinander passen, so kann die IPC-Regelung deaktiviert werden und eine Meldung zum Austauschen des Sensors 118, 124 kann abgesetzt werden. In diesem Ausführungsbeispiel werden die Messungen nicht vorrangig zum Verlängern der Lebensdauer verwendet, sondern zur sicheren Fehlererkennung.

In einem Ausführungsbeispiel ist der Beschleunigungssensor 118 mit einer kamerabasierten Auslenkungssensorik 124 kombiniert. Hierbei wird der Beschleunigungssensor 118 mit einer kamerabasierten Messung der Auslenkung kombiniert. Dabei wird eine Kamera 124 an der Blattwurzel des Rotorblatts 104 angebracht. Diese blickt in das Innere des Rotorblatts 104. Von der Kamera 124 wird die Verschiebung von im Rotorblatt 104 angebrachten Markern gemessen. Die Marker können reflektiv sein und von der Kamera 124 abgestrahltes Licht reflektieren, oder selbst aktiv leuchten, beispielsweise durch LEDs oder das von Glasfasern herangeleitete Licht abstrahlen.

Bei dem hier vorgestellten Ansatz kann eine kostengünstige Kamera 124 mit geringer Auflösung eingesetzt werden. Dabei ist die Messauflösung nicht groß genug, um die Last auf das Rotorblatt 104 nur unter Verwendung der Kamera 124 zu erfassen. In Kombination mit einem Beschleunigungssensor 118 in den Rotorblättern 104 aber kann durch die hier vorgestellte Fusion der Sensordaten in einem Kalmanfilter die erforderliche Messgenauigkeit erreicht werden.

Durch das hier vorgestellte System kann die Blattauslenkung oder eine andere äquivalente Größe, wie das Blattwurzelbiegemoment gemessen werden. Die Messung basiert dabei auf einer Kombination von unterschiedlichen Sensoren 118, 124.

Durch den hier vorgestellten Ansatz können Blattwurzelbiegemomente kostengünstig und mit langer Lebensdauer gemessen werden. Für die beschriebene Messaufgabe kann eine Kombination von mehreren Sensoren eingesetzt werden.

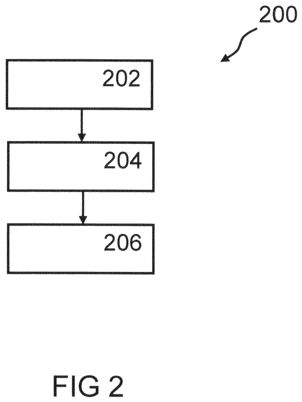

Fig. 2 zeigt ein Ablaufdiagramm eines Verfahrens 200 zum Erfassen einer Last auf ein Rotorblatt einer Windenergieanlage gemäß einem Ausführungsbeispiel der Erfindung. Das Verfahren 200 weist einen Schritt 202 des Herleitens, einen Schritt 204 des Bestimmens und einen Schritt 206 des Ermittelns auf. Im Schritt 202 des Herleitens wird eine Auslenkung des Rotorblatts aus einem Beschleunigungswert hergeleitet. Der Beschleunigungswert repräsentiert eine Beschleunigung am Rotorblatt. Im Schritt 204 des Bestimmens wird ein Signaldriftanteil der Auslenkung unter Verwendung eines Absolutwerts bestimmt. Der Absolutwert repräsentiert einen absoluten Messwert eines Absolutsensors an dem Rotorblatt. Im Schritt 206 des Ermittelns wird die Last unter Verwendung des Signaldriftanteils und der Auslenkung sowie Materialkennwerten des Rotorblatts ermittelt.

In einem Ausführungsbeispiel wird im Schritt 204 des Bestimmens ferner der Absolutwert unter Verwendung der Auslenkung plausibilisiert. Dabei wird der Absolutwert als fehlerhaft definiert, wenn der Absolutwert um mehr als einen Toleranzbereich von der Auslenkung abweicht.

Mit anderen Worten beschreibt der hier vorgestellte Ansatz eine Kombination von Sensoren zu Messung von Rotorblattbelastungen.

Die gezeigten Ausführungsbeispiele sind nur beispielhaft gewählt und können miteinander kombiniert werden.

### Bezugszeichenliste

- 100: Windenergieanlage
- 102: Steuergerät
- 104: Rotorblatt
- 106: Einrichtung zum Herleiten
- 108: Einrichtung zum Bestimmen
- 110: Einrichtung zum Ermitteln
- 112: Auslenkung
- 114: Beschleunigungswert
- 116: Schnittstelle
- 118: Beschleunigungssensor
- 120: Signaldriftanteil
- 122: Absolutwert
- 124: Absolutsensor
- 126: Lastwert
- 200: Verfahren zum Erfassen einer Last
- 202: Schritt des Herleitens
- 204: Schritt des Bestimmens
- 206: Schritt des Ermittelns

## Patentansprüche

1. Verfahren (200) zum Erfassen einer Last auf ein Rotorblatt (104) einer Windenergieanlage (100), wobei das Verfahren (200) die folgenden Schritte aufweist:
Herleiten (202) einer Auslenkung (112) des Rotorblatts (104) aus einem Beschleunigungswert (114), der eine Beschleunigung am Rotorblatt (104) repräsentiert, wobei der Beschleunigungswert (114) zweifach integriert wird, um die Auslenkung (112) zu erhalten;
Bestimmen (204) eines Signaldriftanteils (120) der Auslenkung (112) unter Verwendung eines Absolutwerts (122), der einen absoluten Messwert eines Absolutsensors (124) an dem Rotorblatt (104) repräsentiert, indem die Auslenkung (112) mit einem Dehnungswert (122) als Absolutwert (122) verglichen wird, um den Signaldriftanteil (120) zu erhalten, wobei der Dehnungswert (122) eine durch einen Dehnmessstreifen (124) am Rotorblatt (104) erfassbare Dehnung des Rotorblatts (104) repräsentiert, oder indem die Auslenkung (112) mit einem Positionswert (122) als Absolutwert (122) verglichen wird, um den Signaldriftanteil (120) zu erhalten, wobei der Positionswert (122) eine durch ein Kamerasystem (124) am Rotorblatt (104) erfassbare Position des Rotorblatts (104) repräsentiert; und
Ermitteln (206) der Last unter Verwendung des Signaldriftanteils (120) und der Auslenkung (112) sowie Materialkennwerten des Rotorblatts (104), indem der Signaldriftanteil (120) von der Auslenkung (112) abgezogen wird, um einen stabilisierten Auslenkungsweit zum Ermitteln der Last zu erhalten.

2. Verfahren (200) gemäß Anspruch 1, bei dem im Schritt (204) des Bestimmens die Auslenkung (112) und der Absolutwert (122) unter Verwendung eines Kalmanfilters verglichen werden, um den Signaldriftanteil (120) zu bestimmen.

3. Verfahren (200) gemäß einem der vorangegangenen Ansprüche, bei dem im Schritt (204) des Bestimmens ferner der Absolutwert (122) unter Verwendung der Auslenkung (112) plausibilisiert wird.

4. Verfahren (200) gemäß Anspruch 3, bei dem im Schritt (204) des Bestimmens der Absolutwert (124) als fehlerhaft definiert wird, wenn der Absolutwert (124) um mehr als einen Toleranzbereich von der Auslenkung (112) abweicht.

5. Steuergerät (102) zum Erfassen einer Last auf ein Rotorblatt (104) einer Windenergieanlage (100), aufweisend eine Einrichtung (106) zum Herleiten einer Auslenkung (112) des Rotorblatts (104), eine Einrichtung (108) zum Bestimmen eines Signaldriftanteils (120) der Auslenkung (112) und einer Einrichtung (110) zum Ermitteln der Last auf dem Rotorblatt (104), wobei das Steuergerät (102) ausgebildet ist, um alle Schritte eines Verfahrens (200) gemäß einem der vorangegangenen Ansprüche durchzuführen.

## Claims

1. Method (200) for detecting a load on a rotor blade (104) of a wind turbine (100), the method (200) comprising the following steps:
deriving (202) a deflection (112) of the rotor blade (104) from an acceleration value (114) which represents an acceleration on the rotor blade (104), the acceleration value (114) being integrated twice in order to obtain the deflection (112);
determining (204) a signal drift component (120) of the deflection (112) using an absolute value (122) which represents an absolute measured value of an absolute sensor (124) on the rotor blade (104) by comparing the deflection (112) with a strain value (122) as the absolute value (122) in order to obtain the signal drift component (120), the strain value (122) representing a strain of the rotor blade (104) that can be detected by a strain gauge (124) on the rotor blade (104), or by comparing the deflection (112) with a position value (122) as the absolute value (122) in order to obtain the signal drift component (120), the position value (122) representing a position of the rotor blade (104) that can be detected by a camera system (124) on the rotor blade (104); and
ascertaining (206) the load using the signal drift component (120) and the deflection (112) and also material characteristic values of the rotor blade (104) by subtracting the signal drift component (120) from the deflection (112) in order to obtain a stabilized deflection value for ascertaining the load.

2. Method (200) according to claim 1, in which, in the determination step (204), the deflection (112) and the absolute value (122) are compared using a Kalman filter in order to determine the signal drift component (120).

3. Method (200) according to any one of the preceding claims, in which, in the determination step (204), the absolute value (122) is additionally checked for plausibility using the deflection (112).

4. Method (200) according to claim 3, in which, in the determination step (204), the absolute value (124) is defined as erroneous if the absolute value (124) deviates from the deflection (112) by more than a tolerance range.

5. Control unit (102) for detecting a load on a rotor blade (104) of a wind turbine (100), said control unit comprising a device (106) for deriving a deflection (112) of the rotor blade (104), a device (108) for determining a signal drift component (120) of the deflection (112), and a device (110) for ascertaining the load on the rotor blade (104), the control unit (102) being designed to carry out all the steps of a method (200) according to any one of the preceding claims.

## Revendications

1. Procédé (200) pour détecter une charge sur une pale de rotor (104) d'une éolienne (100), le procédé (200) comprenant les étapes consistant à :
déduire (202) une déformation (112) de la pale de rotor (104) d'une valeur d'accélération (114) qui représente une accélération sur la pale de rotor (104), la valeur d'accélération (114) étant intégrée deux fois pour obtenir la déformation (112) ;
déterminer (204) une composante de dérive de signal (120) de la déformation (112) en utilisant une valeur absolue (122) qui représente une valeur de mesure absolue d'un capteur absolu (124) sur la pale de rotor (104), en comparant la déformation (112) avec une valeur d'allongement (122) en tant que valeur absolue (122) pour obtenir la composante de dérive de signal (120), la valeur d'allongement (122) représentant un allongement de la pale de rotor (104) détectable par une jauge de contrainte (124) sur la pale de rotor (104), ou en comparant la déformation (112) avec une valeur de position (122) en tant que valeur absolue (122) pour obtenir la composante de dérive de signal (120), la valeur de position (122) représentant une position de la pale de rotor (104) détectable par un système de caméra (124) sur la pale de rotor (104) ; et
déterminer (206) la charge en utilisant la composante de dérive de signal (120) et la déformation (112) ainsi que des valeurs caractéristiques de matériau de la pale de rotor (104) en soustrayant la composante de dérive de signal (120) de la déformation (112) pour obtenir une valeur de déformation stabilisée servant à déterminer la charge.

2. Procédé (200) selon la revendication 1, dans lequel, à l'étape (204) de détermination, la déformation (112) et la valeur absolue (122) sont comparées en utilisant un filtre de Kalman pour déterminer la composante de dérive de signal (120).

3. Procédé (200) selon l'une des revendications précédentes, dans lequel, à l'étape (204) de détermination, la valeur absolue (122) est en outre plausibilisée en utilisant la déformation (112).

4. Procédé (200) selon la revendication 3, dans lequel, à l'étape (204) de détermination, la valeur absolue (124) est définie comme erronée si la valeur absolue (124) s'écarte de plus d'une plage de tolérance de la déformation (112).

5. Dispositif de commande (102) pour détecter une charge sur une pale de rotor (104) d'une éolienne (100), présentant un moyen (106) pour déduire une déformation (112) de la pale de rotor (104), un moyen (108) pour déterminer une composante de dérive de signal (120) de la déformation (112) et un moyen (110) pour détecter la charge sur la pale de rotor (104), le dispositif de commande (102) étant conçu pour exécuter toutes les étapes d'un procédé (200) selon l'une des revendications précédentes.
